# EUROPÄISCHE PATENTSCHRIFT

(11) **EP 3 405 770 B1**
(45) Veröffentlichungstag und Bekanntmachung des Hinweises auf die Patenterteilung: **09.08.2023**
(21) Anmeldenummer: 17700141.9
(22) Anmeldetag: 09.01.2017
(51) Int. Cl.: G01N 3/46, G01N 3/42

(54) **MESSVORRICHTUNG, MESSANORDNUNG UND VERFAHREN ZUR ERMITTLUNG VON MESSSIGNALEN WÄHREND EINER EINDRINGBEWEGUNG EINES EINDRINGKÖRPERS IN EINE OBERFLÄCHE EINES PRÜFKÖRPERS**
MEASURING SYSTEM, MEASURING ARRANGEMENT, AND METHOD FOR DETERMINING MEASURING SIGNALS DURING A PENETRATION MOVEMENT OF A PENETRATION BODY INTO A SURFACE OF A TEST BODY
DISPOSITIF DE MESURE, SYSTÈME DE MESURE ET PROCÉDÉ POUR DÉTERMINER DES SIGNAUX DE MESURE PENDANT UN MOUVEMENT DE PÉNÉTRATION D'UN CORPS DE PÉNÉTRATION DANS UNE SURFACE D'UN ÉCHANTILLON

(30) Priorität: 18.01.2016 DE 102016100707
(43) Veröffentlichungstag der Anmeldung: 28.11.2018
(73) Patentinhaber: Helmut Fischer GmbH Institut für Elektronik und Messtechnik, 71069 Sindelfingen (DE)
(72) Erfinder: FISCHER, Helmut, 6315 Oberägeri (CH)
(74) Vertreter: Mammel und Maser Patentanwälte PartG mbB
(86) Internationale Anmeldenummer: PCT/EP2017/050305
(87) Internationale Veröffentlichungsnummer: WO 2017/125269

(56) Entgegenhaltungen:
- DE-T2- 69 917 780
- JP-A- H05 346 383
- US-A- 2 628 495
- US-A- 5 067 346
- US-A1- 2004 011 119
- US-A1- 2006 150 710
- US-A1- 2014 150 562
- US-A1- 2014 373 608

## Beschreibung

Die Erfindung betrifft eine Messvorrichtung sowie eine Messanordnung und ein Verfahren zur Erfassung von Messsignalen während einer Eindringbewegung eines Eindringkörpers in eine Oberfläche eines Prüfkörpers als auch zur Ermittlung der Kratzfestigkeit der Oberfläche des Prüfkörpers.

Aus der US 2004/0011119 A1 ist eine Messvorrichtung zur Erfassung von Messsignalen während einer Eindringbewegung eines Eindringkörpers in eine Oberfläche eines Prüfkörpers bekannt. Der Eindringkörper ist in einem Gehäuse durch zwei parallel zueinander ausgerichtete Blattfedern auf und ab bewegbar geführt. Zwischen den beiden Blattfedern ist eine kapazitive Messeinrichtung vorgesehen. Einer Eindringspitze des Eindringkörpers gegenüberliegend ist eine elektromagnetische Krafterzeugungseinrichtung vorgesehen.

Aus der DE 699 17 780 T2 sind eine Messeinrichtung sowie ein Verfahren zur Messung der Kratzfestigkeit einer Oberfläche eines Prüfkörpers bekannt, welche einen Messtisch zur Aufnahme eines Prüfkörpers sowie eine Handhabungseinrichtung zum Überführen der Messvorrichtung aus einer Ausgangsposition in eine Messposition aufweist. Des Weiteren ist eine Steuerung vorgesehen, durch welche die Messvorrichtung nach dem Aufsetzen eines Prüfkörpers auf der zu prüfenden Oberfläche sowohl eine Verfahrbewegung des Messtisches entlang einer Achse als auch eine Eindringbewegung des Eindringkörpers angesteuert wird, so dass während der Verfahrbewegung des Messtisches der Eindringkörper in die Oberfläche des Prüfkörpers eindringt.

Zur Ansteuerung der Eindringbewegung des Eindringkörpers nach dem Aufsetzen auf der Oberfläche des Prüfkörpers weist die Messvorrichtung einen piezoelektrischen Aktuator auf, der eine erste Halteplatte beaufschlagt, welche mittels zwei Blattfederpaaren auf und ab bewegbar ist. Diese Halteplatte nimmt eine weitere Platte auf, welche wiederum durch zwei Blattfederpaare auf und ab bewegbar gelagert ist, wobei in dieser Platte der Eindringkörper angeordnet ist. Zwischen der Halteplatte und der den Eindringkörper aufnehmenden Platte ist eine Messvorrichtung vorgesehen, welche den Eindringweg misst. Des Weiteren ist daneben eine Messvorrichtung für die Ermittlung der Normalkraft angeordnet.

Diese Messvorrichtung weist den Nachteil auf, dass zwischen dem piezoelektrischen Aktuator und der Eindringspitze ein konstruktiv aufwändiger und schwerer Aufbau durch die Halteplatte als auch durch die den Eindringkörper aufnehmende Platte sowie durch die jeweils zur Lagerung ausgewählten Blattfederpaare vorgesehen ist. Dadurch ist nicht nur ein großer Bauraum erforderlich, sondern auch der piezoelektrische Antrieb entsprechend groß auszulegen, um die Kraft zur Ansteuerung einer Eindringbewegung aufzubringen. Darüber hinaus ist diese Messvorrichtung träge aufgrund des aufwändigen und konstruktiven Aufbaus. Weiterhin ist die Messvorrichtung aufgrund der Ansteuerung des Eindringkörpers mittels eines hochpräzisen piezoelektrischen Aktuators kostenintensiv.

Aus der JP 63-171 339 A ist ein Härtemessinstrument bekannt, welches in einem fahrbaren Wagen einen Eindringkörper zum Einbringen eines Kratzers in eine Messoberfläche aufweist. Die Eindringbewegung des Eindringkörpers wird über eine Öldruckkammer angesteuert, indem mit einer Hydraulikpumpe der Steuerdruck erhöht wird. Diese Vorrichtung weist den Nachteil auf, dass das System träge ist. Eine Abtastbewegung einer Oberfläche zur Ermittlung der Oberflächenrauigkeit ist nicht möglich.

Aus der US 2 628 495 A ist ein Härtemessgerät bekannt. Dieses Härtemessgerät umfasst einen mit Druck beaufschlagbaren Balg, wobei an einem Boden des Balges ein Eindringkörper vorgesehen ist. Dieser Eindringkörper wirkt gegen einen Anker, auf welchem ein Gegenstand aufsetzbar ist.

Aus der US 2014/0373608 A1 ist eine Kratzfestigkeitsvorrichtung bekannt. Diese umfasst einen U-förmigen Grundkörper, an dessen jeweiligen freien Schenkeln Gleitelemente zur Auflage der Vorrichtung auf dem Messgegenstand vorgesehen sind. Innerhalb des U-förmigen Grundkörpers ist ein Eindringkörper vorgesehen, dessen Eindringkraft elektromagnetisch, mechanisch, hydraulisch, pneumatisch oder dergleichen aufgebraucht werden kann.

Aus der US 2006/0150710 A1 ist des Weiteren eine Kratzfestigkeitsvorrichtung bekannt, bei welcher zwei horizontal und parallel zueinander ausgerichtete Führungsstäbe vorgesehen sind, die einen Träger aufnehmen, der senkrecht zu einer Messoberfläche auf und ab bewegbar ist. An diesem Träger ist ein Eindringkörper vorgesehen. Über eine Krafterzeugungseinrichtung wird eine Eindringbewegung des Eindringkörpers angesteuert. Diese Eindringkraft kann pneumatisch, hydraulisch, federbelastet oder durch einen elektrischen Aktuator erfolgen.

Der Erfindung liegt die Aufgabe zugrunde, eine Messvorrichtung zur Erfassung von Messsignalen während einer Eindringbewegung eines Eindringkörpers in eine Oberfläche eines Prüfkörpers, zur Ermittlung der Kratzfestigkeit der Oberfläche des Prüfkörpers oder zur Erfassung von Messsignalen während einer Abtastbewegung eines Eindringkörpers auf der Oberfläche des Prüfkörpers, insbesondere zur Ermittlung der Oberflächenrauigkeit des Prüfkörpers, sowie eine Messanordnung als auch ein Verfahren zur Ermittlung von Messsignalen während einer Eindringbewegung eines Eindringkörpers, insbesondere zur Ermittlung der Kratzfestigkeit der Oberfläche des Prüfkörpers oder während einer Abtastbewegung des Eindringkörpers, zu schaffen, wodurch eine erhöhte Maßgenauigkeit und eine Kostenreduzierung ermöglicht wird.

Diese Aufgabe wird durch eine Messvorrichtung mit einem Eindringkörper und mit einer Krafterzeugungseinrichtung, mit welcher der Eindringkörper wirkverbunden ist und in eine zu messende Oberfläche des Prüfkörpers eindringt oder eine zu messende Oberfläche des Prüfkörpers abtastet und mit zumindest einer Messeinrichtung zur Messung der Eindringtiefe oder der Oberflächenrauigkeit gelöst, bei der die Krafterzeugungseinrichtung mittels eines gasförmigen Druckmediums für die Eindringbewegung oder für die Abtastbewegung des Eindringkörpers angesteuert ist. Der Einsatz einer solchen Krafterzeugungseinrichtung, welche mittels eines Druckmediums die Eindringbewegung oder die Abtastbewegung des Eindringkörpers ansteuert, weist den Vorteil auf, dass der beaufschlagte Druck mittels dem Druckmedium unmittelbar in eine Eindringbewegung umsetzbar ist, das heißt, eine Zunahme der Druckkraft entspricht einer unmittelbaren Zunahme der Kraft für die Eindringbewegung und umgekehrt. Bei einer Abtastbewegung wirkt der beaufschlagte Druck in der Krafterzeugungseinrichtung vorzugsweise als ein steifes Stellglied, wodurch die Änderungen in der Oberfläche des Prüfkörpers auf die Krafterzeugungseinrichtung und vorzugsweise an ein Sensorelement übertragen werden können. Dadurch kann ein einfaches und direktes Ansteuern ermöglicht sein. Zudem weist eine solche mit einem Druckmedium arbeitende Krafterzeugungseinrichtung eine geringe Masse und somit eine geringe Massenträgheit auf. Darüber hinaus ist ermöglicht, dass eine solche Krafterzeugungseinrichtung, welche mittels einem Druckmedium arbeitet, unabhängig von Temperaturänderungen ist, da eine Änderung der Temperatur sich unmittelbar auf den Druck auswirkt und dieser Druck durch die Krafterzeugungseinrichtung sofort nachregelbar ist. Dadurch können auch konstante Drücke für die Eindringbewegung oder die Abtastbewegung des Eindringkörpers aufrecht erhalten werden. Insbesondere bei einer Vielzahl von Messungen können dadurch eine Kontinuität und eine erhöhte Messsicherheit gegeben sein.

Die Krafterzeugungseinrichtung weist eine Druckkammer mit zumindest einer ersten Druckfläche auf, die mit dem Eindringkörper wirkverbunden ist. Dadurch kann bei einer Zunahme eines Druckes eine unmittelbare Eindringbewegung des Eindringkörpers angesteuert werden. Zudem können dadurch hohe Kräfte bei einer noch hinreichend geringen Bauraumgröße erzeugt werden.

Die eine Druckkammer aufweisende Krafterzeugungseinrichtung weist bevorzugt eine Einlassöffnung und eine Auslassöffnung auf, welche außerhalb oder benachbart der Druckfläche in der Druckkammer vorgesehen sind. Dadurch kann die Druckfläche ausschließlich in Richtung des Eindringkörpers ausgerichtet sein und mit diesem zusammenwirken, so dass die Einlass- und Auslassöffnung vorteilhafterweise seitlich zur zumindest einen ersten Druckfläche angeordnet sind und somit keinen unmittelbaren Einfluss auf die Druckfläche auswirken.

Die Krafterzeugungseinrichtung umfasst vorteilhafterweise zumindest eine Pumpe, durch welche das Druckmedium der Druckkammer zugeführt wird. Dabei kann die Pumpe geregelt angesteuert werden, so dass diese unmittelbar den Druck in der Druckkammer bestimmt.

Des Weiteren ist bevorzugt der Einlassöffnung der Druckkammer vorgeschalten ein Einlasssteuerventil und der Auslassöffnung der Druckkammer nachgeschalten ein Auslassventil vorgesehen. Durch solche Steuerventile kann in einfacher Weise ein Druck in der Druckkammer aufrechterhalten und/oder angepasst werden.

Eine weitere bevorzugte Ausführungsform der Krafterzeugungseinrichtung sieht zwischen der Pumpe und dem Einlasssteuerventil oder der Einlassöffnung einen Speicherbehälter vor. Dadurch kann beispielsweise die Pumpe relativ klein ausgebildet sein, so dass die Ansteuerung der Druckkammer und die Versorgung mittels dem Druckmedium über den Speicherbehälter bedarfsmäßig erfolgt. Zudem können bei einer direkten Einspeisung des Druckmediums von der Druckkammer durch die Pumpe erzeugte Druckspitzen abgebaut werden.

Die Druckkammer weist eine zweite Druckfläche auf, welche der ersten Druckfläche gegenüberliegt. Dadurch kann die Druckkammer in einfacher Form, beispielsweise als eine Druckdose, ausgebildet sein, welche zwei einander gegenüberliegende Druckflächen aufweist, so dass der im Innenraum der Druckkammer wirkende Druck gleichmäßig auf beide Druckflächen wirkt.

Des Weiteren ist die Druckkammer bevorzugt in einem Gehäuse vorgesehen, an dessen Seiten- oder Umfangswand die Ein- und Auslassöffnung angeordnet ist und welches an einer Unterseite eine erste Druckfläche aufweist. Dies stellt eine einfache und kostengünstige Ausgestaltung der Messvorrichtung sowie eine platzsparende Integration der Druckkammer in der Messvorrichtung dar.

Des Weiteren ist der zweiten Druckfläche der Druckkammer vorzugsweise außerhalb der Druckkammer ein Sensor zugeordnet. Mittels dieses Sensors kann eine Auslenkung der zweiten Druckfläche erfasst werden, um die tatsächlich wirkende Druckkraft zu erfassen, welche aufgrund des herrschenden Drucks in der Druckkammer auf den Eindringkörper ausgeübt wird.

Des Weiteren ist die Druckkammer bevorzugt als eine Dose ausgebildet, welche in das Gehäuse einsetzbar ist. Dies weist den Vorteil auf, dass kalibrierte Druckdosen in einfacher Weise in einem Gehäuse integriert werden können.

Die erste und zweite Druckfläche sind als eine Druckmembran ausgebildet, die parallel zueinander ausgerichtet sind. Folglich ist dazwischen liegend eine feste Umfangswand vorgesehen, in der die Ein- und Auslassöffnung angeordnet und vorzugsweise an der Umfangswand des Gehäuses befestigt sind. Die Druckmembrane können bevorzugt mittels eines Befestigungsringes an der Umfangswand befestigt werden, wodurch ein einfacher Zusammenbau der Druckkammer gegeben sein kann.

Die Druckfläche weist eine Bewegungsfreiheit in nur einem Freiheitsgrad auf. Dieser eine Bewegungsfreiheitsgrad liegt bevorzugt in der Längsmittelachse des Gehäuses, also in einer Z-Achse, in welcher auch die Zustellbewegung des Eindringkörpers zum Eindringen in die Oberfläche des Prüfkörpers liegt.

Zwischen der ersten Druckfläche, der Druckkammer und dem Eindringkörper ist die erste Messeinrichtung zur Messung eines Verfahrweges des Eindringkörpers, insbesondere der Eindringtiefe des Eindringkörpers oder der Abtastbewegung zur Ermittlung der Oberflächenrauheit des Eindringkörpers, vorgesehen. Dies führt wiederum zu einem kompakten Aufbau.

Des Weiteren ist für einen kompakten Aufbau der Messvorrichtung zwischen der ersten Druckfläche und dem Eindringkörper eine weitere Messeinrichtung zur Erfassung einer Auslenkung des Eindringkörpers entlang zumindest einer Achse vorgesehen, die der Verfahrbewegung des Prüfkörpers relativ zum Eindringkörper, insbesondere beim Durchführen einer Kratzfestigkeitsprüfung, entspricht. Bevorzugt ist auch diese weitere Messeinrichtung in derselben Z-Achse wie die erste Messeinrichtung positioniert.

Des Weiteren kann alternativ die weitere Messeinrichtung zur Erfassung einer Auslenkung des Eindringkörpers sowohl entlang der Achse, die der Verfahrbewegung des Prüfkörpers relativ zum Eindringkörper entspricht, erfasst sowie auch in einer rechtwinklig dazu ausgerichteten Achse ermittelt werden. Somit kann diese weitere Messeinrichtung sowohl in X-Richtung als auch in Y-Richtung - also in der Ebene der Oberfläche des Prüfkörpers - Änderungen in der Position des Eindringkörpers während dem Eindringen in die Oberfläche des Prüfkörpers erfassen.

Die Messeinrichtung zur Messung der Verfahrbewegung des Eindringkörpers entlang der Z-Achse, insbesondere der Eindringtiefe, und die zumindest eine weitere Messeinrichtung zur Erfassung zumindest einer Auslenkung des Eindringkörpers entlang der Verfahrbewegung des Prüfkörpers sind bevorzugt in einem an die Druckkammer anschließenden Gehäuseabschnitt des Gehäuses vorgesehen. Bevorzugt sind diese hintereinander entlang einer Längsachse des Gehäuses angeordnet, wodurch die erste und zumindest eine weitere Messeinrichtung unmittelbar bei einer durch die Druckkammer angesteuerten Eindringbewegung des Eindringkörpers Messsignale erfassen können.

An einem unteren Gehäuseabschnitt des Gehäuses und zur ersten Druckfläche der Druckkammer beabstandet ist ein Halteelement vorgesehen, welches den Eindringkörper aufnimmt. Dadurch ist der Eindringkörper in einer definierten Position zum Gehäuse aufgenommen. Das Halteelement ist bevorzugt als eine Druckmembran ausgebildet, die zumindest eine Bewegungsfreiheit in einem Freiheitsgrad in der Z-Achse aufweist. Dadurch wird während dem Eindringen des Eindringkörpers in die Oberfläche des Prüfkörpers eine Drehung oder Winkelbewegung vermieden.

Des Weiteren ist bevorzugt das Halteelement in seiner Erstreckungsebene zumindest in Richtung der Auslenkung des Eindringkörpers entlang der Verfahrbewegung des Prüfkörpers weich beziehungsweise nachgiebig ausgebildet und in einer Richtung senkrecht dazu steif ausgebildet. Dadurch können weitere Messsignale während dem Einbringen eines Ritzes oder eines Kratzers in die Oberfläche erfasst werden, um beispielsweise die Homogenität der Beschichtung, Einschlüsse oder dergleichen zu erfassen.

Das Halteelement ist bevorzugt parallel zur ersten und zweiten Druckfläche ausgerichtet. Dadurch sind alle an der Verfahrbewegung des Eindringkörpers beteiligten Komponenten gleich ausgerichtet. Durch das im Abstand zur ersten und zweiten Druckfläche angeordnete Halteelement kann darüber hinaus ein Verkippen des Eindringkörpers gegenüber der Krafteinleitung über die Druckkammer verlustfrei erfolgen.

Die erste und/oder zweite Druckfläche und/oder das Halteelement sind bevorzugt aus Kupfer-Beryllium hergestellt. Dieses Material ist besonders geeignet, da es nahezu hysteresefrei ist. Dadurch ist eine direkte und verlustfreie Ansteuerung des Eindringkörpers möglich.

Des Weiteren ist bevorzugt zwischen der ersten Druckfläche und dem Eindringkörper ein Übertragungsstift vorgesehen. Dieser ist bevorzugt drucksteif ausgebildet. Dadurch kann eine konstruktiv einfache und leichtbauende Ausgestaltung geschaffen werden. Zudem kann eine direkte Verbindung zwischen dem Eindringkörper und der ersten Druckfläche hergestellt werden.

Vorteilhafterweise ist der Übertragungsstift sowohl mit der Druckfläche als auch mit dem Eindringkörper fest gekoppelt und bildet eine starre Verbindung. Dadurch kann wiederum die durch die Druckkammer erzeugte Stellkraft unmittelbar in eine Eindringbewegung des Eindringkörpers umgesetzt sein.

Die zumindest eine erste Messeinrichtung zum Messen des Verfahrweges des Eindringkörpers, insbesondere die Eindringbewegung, und die zumindest eine weitere Messeinrichtung weisen jeweils zumindest zwei relativ zueinander bewegbare Sensorelemente auf, wobei jeweils eines der Sensorelemente feststehend am Gehäuse und das zumindest eine weitere Sensorelement an dem Übertragungsstift angeordnet ist. Dadurch wird während einer Eindringbewegung ein Verfahrweg in gleichem Maße sowohl von der ersten und weiteren Messeinrichtung erfasst, da diese hintereinander liegend angeordnet sind.

Des Weiteren arbeitet die erste Messeinrichtung bevorzugt nach dem Wirbelstromverfahren. Hierbei handelt es sich um bewährte und rückwirkungsfreie Messeinrichtungen, die auch in einer kompakten Bauweise vorgesehen sein können. Beispielsweise kann eine Ferritplatte oder ein Ferritring als bewegbares Sensorelement an dem Übertragungsstift und an einem Gehäuse als zweites feststehendes Sensorelement eine Topfspule, vorzugsweise lösbar, insbesondere durch eine Schraubverbindung, befestigt sein.

Die zumindest eine weitere Messeinrichtung zur Erfassung der zumindest einen Auslenkung des Eindringkörpers umfasst beispielsweise einen Ferritring oder einen Ferritring als bewegbares Sensorelement, der an dem Übertragungsstift angeordnet ist sowie zumindest eine erste Spule, die dem Ferritring zugeordnet ist, so dass die Messeinrichtung ebenso nach dem Wirbelstromverfahren arbeitet. Dadurch kann eine Auslenkung des Eindringkörpers in X-Richtung erfasst werden. Beispielsweise kann die Messeinrichtung zwei um 180° zueinander versetzt angeordnete Spulen aufweisen, um eine Auslenkung des Eindringkörpers, respektive des Übertragungsstiftes, entlang der Verfahrrichtung des Probekörpers zu erfassen. Alternativ können auch zwei Spulen einem Ferritring zugeordnet sein, die um 90° zueinander versetzt sind, so dass zum einen eine Auslenkung des Übertragungsstiftes entlang des Verfahrweges des Probekörpers - also in X-Richtung - und zum anderen in Y-Richtung erfasst werden kann.

Des Weiteren ist bevorzugt an der ersten und/oder zweiten Druckfläche ein Druckstempel vorgesehen, der zur Aufnahme von einem weiteren Element vorgesehen ist. Somit kann beispielsweise an der zweiten Druckfläche ein Sensorelement oder eine Komponente eines Sensorelementes, wie beispielsweise ein Drucksensor, angeordnet sein. An dem weiteren, der ersten Druckfläche zugeordneten Stempel kann vorzugsweise auswechselbar der Übertragungsstift fixiert werden.

Eine weitere vorteilhafte Ausgestaltung der Messvorrichtung sieht vor, dass der Eindringkörper auswechselbar an dem Übertragungsstift angeordnet ist. Dadurch kann bei mehrmaligen Messungen ein einfacher Austausch erfolgen. Alternativ kann auch nur die Eindringspitze auswechselbar an dem Eindringkörper ausgebildet sein. Dies weist nicht nur den Vorteil auf, dass bei einem Verschleiß ein schneller Wechsel ermöglicht ist, sondern dass auch in Abhängigkeit von unterschiedlich zu prüfenden Oberflächen eine entsprechende Eindringspitze ausgewählt und eingesetzt werden kann. Beispielsweise kann die Eindringspitze aus Diamant, Korund, Topas oder Quarz hergestellt sein.

Bevorzugt ist als Druckmedium Druckluft vorgesehen.

Die der Erfindung zugrunde liegende Aufgabe wird des Weiteren durch eine Messanordnung zum Erfassen von Messsignalen während einer Verfahrbewegung, insbesondere einer Eindringtiefe oder einer Abtastbewegung, eines Eindringkörpers in eine Oberfläche oder auf einer Oberfläche eines Prüfkörpers gelöst, bei der auf einem Grundkörper oder einer Basisplatte ein Messtisch zur Aufnahme des Prüfkörpers vorgesehen ist sowie eine Handhabungseinrichtung, insbesondere ein Stativ, welche eine Messvorrichtung aufnimmt, die über die Handhabungseinrichtung in eine Position zum Aufsetzen eines Eindringkörpers auf den Prüfkörper übergeführt wird, wobei die Verfahrbewegung zum Eindringen des Eindringkörpers in die Oberfläche des Prüfkörpers oder die Verfahrbewegung zum Abtasten der Oberfläche des Eindringkörpers durch eine Messvorrichtung nach einem oder mehreren der vorher beschriebenen Merkmale der Ausführungsformen angesteuert ist und durchgeführt wird.

Des Weiteren nimmt die Messanordnung bevorzugt eine optische Erfassungseinrichtung benachbart zur Messvorrichtung auf, welche die Eindringstelle, die Oberflächenrauheit oder bei Durchführung der Kratzfestigkeitsprüfung den eingebrachten Kratzer optisch erfasst und auswertet. Dabei ist bevorzugt der Messtisch zwischen der Messvorrichtung und der optischen Erfassungseinrichtung verfahrbar. Alternativ können die Messvorrichtung und die optische Erfassungseinrichtung zum Messtisch verfahrbar sein.

Des Weiteren ist bevorzugt eine Verfahrbewegung des Messtisches, insbesondere eine entlang einer Verfahrrichtung in der Ebene der Oberfläche des Prüfkörpers liegende Achse, durch die Steuerung angesteuert. Durch diese Steuerung kann somit beim Aufsetzen des Eindringkörpers auf die Oberfläche des Prüfkörpers, welcher eine Startposition bildet, und einer darauffolgenden gesteuerten Verfahrbewegung eine Oberflächenkontur oder eine Rauigkeit der Oberfläche erfasst werden. Dies kann auch für einen Pre-Scan einer Kratzfestigkeitsermittlung durchgeführt werden. Ebenso kann ausgehend von der Startposition während der Verfahrbewegung des Messtisches zum Eindringkörper eine Eindringbewegung des Eindringkörpers angesteuert werden, um einen Kratzer zu bilden. Auch kann ausgehend von der Startposition ein Post-Scan für eine Kratzfestigkeitsprüfung angesteuert werden.

Bevorzugt sind zur Ansteuerung der Messvorrichtung eine Pumpe und vorzugsweise ein Speicherbehälter vorgesehen, welche mit einer Förderleitung das Druckmedium der Messvorrichtung zuführt, wobei diese Pumpe und vorzugsweise ein Speicherbehälter getrennt zum gemeinsamen Grundkörper des Messanordnung angeordnet sind, um das Eintragen von Schwingungen zumindest auf dem Messtisch, insbesondere dem Prüfkörper, zu vermeiden.

Die der Erfindung zugrunde liegende Aufgabe wird des Weiteren durch ein Verfahren zum Erfassen von Messsignalen während einer Eindringbewegung eines Eindringkörpers in eine Oberfläche eines Prüfkörpers mit einer Messvorrichtung oder während einer Abtastbewegung eines Eindringkörpers auf einer Oberfläche eines Prüfkörpers, bei dem der Prüfkörper auf einem Messtisch positioniert und die Messvorrichtung auf den Prüfkörpers aufgesetzt wird, gelöst, indem eine Eindringbewegung des Eindringkörpers mit einer Krafterzeugungseinrichtung angesteuert wird, welche mit einem Prüfdruck eines gasförmigen Druckmediums für die Eindringbewegung des Eindringkörpers in den Prüfkörper oder für eine Abtastbewegung auf dem Prüfkörper beaufschlagt wird. Dies ermöglicht eine kostengünstige Ausgestaltung der Krafterzeugungseinrichtung. Zudem kann eine exakte Ansteuerung des Eindringkörpers erzielt werden, da die Krafterzeugungseinrichtung eine geringe Masse umfasst und dadurch zusätzliche Beeinträchtigungen aufgrund einer Trägheit von hohen Massen nicht gegeben sind.

Bevorzugt wird die Krafterzeugungseinrichtung vor dem Aufsetzen auf die Oberfläche des Prüfkörpers mit einem Ausgangsdruck beaufschlagt, die Messvorrichtung auf den Prüfkörper zubewegt und beim Aufsetzen des Eindringkörpers der Messvorrichtung die Verfahrbewegung der Messvorrichtung stillgesetzt, darauffolgend die Krafterzeugungseinrichtung mit einem Prüfdruck beaufschlagt und eine Eindringbewegung des Eindringkörpers in die Oberfläche des Prüfkörpers mit einer ersten Messvorrichtung erfasst. Dadurch kann eine exakte Erfassung einer Härte einer Oberfläche des Prüfkörpers ermittelt werden, da die Eindringbewegung einerseits und die durch den Prüfdruck aufgebrachte Kraft andererseits exakt erfasst zur Ermittlung der Härte der Oberfläche des Prüfkörpers ausgewertet werden können. Der Ausgangsdruck, mit welchem die Krafterzeugungseinrichtung während der Zustellbewegung der Messvorrichtung bis zum Aufsetzen auf den Prüfkörper beaufschlagt wird, kann beispielsweise der Umgebungsdruck sein. Alternativ kann auch ein Überdruck gegenüber dem Umgebungsdruck eingebracht sein. Dadurch können definierte Zustände bezüglich der Kraftmesseinrichtung geschaffen werden.

Zur Durchführung des Verfahrens wird bevorzugt eine Druckkammer als Krafterzeugungseinrichtung eingesetzt und eine Eindringbewegung des Eindringkörpers in die Oberfläche des Prüfkörpers mit einer ersten Druckfläche der Druckkammer angesteuert. Eine der ersten Druckfläche gegenüberliegende zweite Druckfläche der Druckkammer wird dabei relativ zu einem Sensor bewegt, wobei durch den Sensor die auf den Eindringkörpers mittels der Druckkammer wirkende Kraft erfasst wird. Die durch die Druckkammer erzeugte Eindringbewegung bezüglich der Eindringtiefe wird mittels einer ersten Messeinrichtung erfasst. Dadurch kann aus der auf den Eindringkörper wirkenden Kraft, welche mittels des Sensors ermittelt wird und der Eindringtiefe, welche mittels der ersten Messeinrichtung erfasst wird, in Abhängigkeit des gewählten Eindringkörpers die Härte der Oberfläche des Prüfkörpers bestimmt werden. Somit kann eine pneumatische Härtemessvorrichtung geschaffen sein.

Zur Ermittlung einer Kratzfestigkeit der Oberfläche des Prüfkörpers wird bevorzugt während der Eindringbewegung des Eindringkörpers der Messtisch mit dem darauf aufgebrachten Prüfkörper in einer Richtung senkrecht zur Eindringbewegung des Eindringkörpers verfahren und ein Kratzer in die Oberfläche des Prüfkörpers eingebracht. Durch eine erste Messeinrichtung werden Messsignale bezüglich der Eindringtiefe in Abhängigkeit der Zeit und des Verfahrweges erfasst. Des Weiteren wird mittels einer zweiten Messeinrichtung der Messvorrichtung eine Auslenkung des Eindringkörpers entgegen der Verfahrrichtung des Messtisches erfasst. Aus diesen erfassten Signalen kann die Kratzfestigkeit einer Oberfläche des Prüfkörpers bestimmt werden.

Des Weiteren wird bevorzugt während dem Einbringen eines Kratzers in die Oberfläche des Prüfkörpers zusätzlich eine rechtwinklig zur Verfahrbewegung des Messtisches ausgerichtete Auslenkung des Eindringkörpers durch eine weitere Messvorrichtung erfasst. Dadurch kann zusätzlich eine Auswertung bezüglich der Oberfläche des Prüfkörpers geschaffen und insbesondere eine Aussage über die Homogenität des Materials erzielt werden.

Des Weiteren wird bevorzugt vor dem Einbringen eines Kratzers in den Prüfkörper die Messvorrichtung auf der Oberfläche aufgesetzt, in einer Richtung senkrecht zur Aufsetzbewegung des Prüfkörpers verfahren und die Oberfläche abgetastet. Dabei werden durch die erste Messvorrichtung Signale erfasst und als Vorkratz-Profil gespeichert. Durch einen sogenannten Pre-Scan kann der Verlauf der Oberfläche des Prüfkörpers bestimmt werden, so dass dieser weitere Parameter bei der anschließenden Bestimmung der Kratzfestigkeit mit einfließen kann.

Des Weiteren ist zur Ermittlung der Kratzfestigkeit vorgesehen, einen sogenannten Post-Scan durchzuführen. Bevorzugt wird nach dem Einbringen des Kratzers in den Prüfkörper die Messvorrichtung in dem Kratzer aufgesetzt und der Eindringkörper mit der Messvorrichtung in einer Richtung senkrecht zur Aufsetzbewegung des Prüfkörpers verfahren und die durch die Messvorrichtung erfassten Signale entlang der Verfahrbewegung des Eindringkörpers in dem Kratzer erfasst und als Nachkratz-Profildaten gespeichert.

Eine weitere bevorzugte Ausgestaltung des Verfahrens sieht vor, dass der Prüfdruck in der Krafterzeugungseinrichtung während der Abtastbewegung des Eindringkörpers konstant gehalten wird. Dabei kann der Eindringkörper unter gleichbleibenden Bedingungen entlang der Oberfläche des Prüfkörpers geführt werden, wobei die Druckkammer dann quasi als ein steifes Stellglied ausgebildet ist, so dass die auf den Eindringkörper wirkende Verfahrbewegung längs der Längsachse des Gehäuses aufgrund der Oberflächenrauheit unmittelbar übertragen und von zumindest einem Sensorelement erfasst werden kann. Der Prüfdruck kann der Umgebungsdruck oder ein Überdruck sein, mit welchem die Druckkammer beaufschlagt ist.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine schematische Ansicht einer erfindungsgemäßen Messanordnung,
Figur 2 eine schematisch vergrößerte Ansicht einer erfindungsgemäßen Messvorrichtung der Messanordnung gemäß Figur 1,
Figur 3 eine schematische Ansicht von unten auf die Messvorrichtung gemäß Figur 2,
Figur 4 eine schematische Schnittansicht der Messvorrichtung gemäß Figur 2, und
Figur 5 eine schematische Ansicht der Messvorrichtung gemäß Figur 2 und den damit verbundenen Komponenten, welche durch eine gemeinsame Steuerung angesteuert werden.

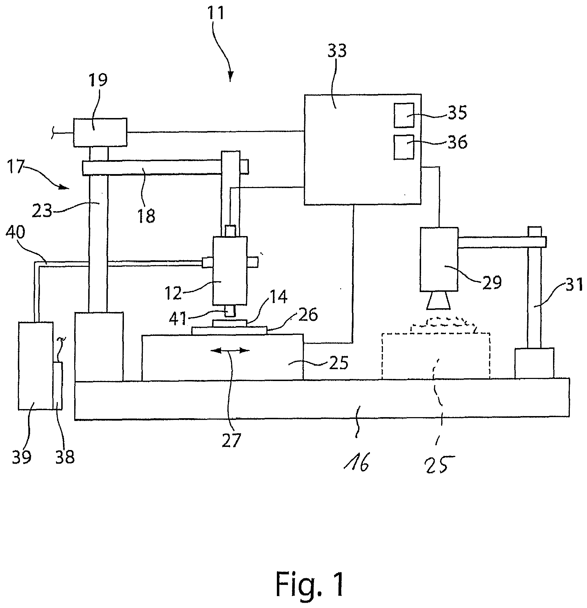

In Figur 1 ist schematisch eine Messanordnung 11 dargestellt. Eine solche Messanordnung 11 kann zum Prüfen von mechanischen und/oder physikalischen Eigenschaften von Oberflächen an Prüfkörpern 14, wie beispielsweise Folien, Schichten und/oder Beschichtungen auf Gegenständen, vorgesehen sein. Beispielsweise kann die Messanordnung 11 als eine Härtemesseinrichtung eingesetzt werden, bei der durch Eindringen mittels eines Eindringkörpers 41 einer Messvorrichtung 12 eine Härtemessung durchgeführt wird. Des Weiteren kann diese Messanordnung 11 mit der Messvorrichtung 12 dafür vorgesehen werden, um eine Kratzfestigkeit einer Folie, einer Schicht oder Beschichtung auf Gegenständen zu ermitteln. Dabei können beispielsweise CVD- oder PVD-Beschichtungen bezüglich deren Kratzfestigkeit getestet werden. Ebenso können weitere Mikrokratzer erfasst oder anderweitige Verformungsinformationen von der Oberfläche erfasst und analysiert werden. Ebenso ermöglicht diese Messanordnung 11 insbesondere mit der Messvorrichtung 12 auch eine Rauheitsmessung einer Oberfläche des Prüfkörpers 14, ohne dass eine Beschädigung der Oberfläche des Prüfkörpers 14 damit einhergeht. In diesem Fall wird der Eindringkörper 41 auf der Oberfläche des Prüfkörpers 14 aufgesetzt und entlang der Oberfläche zum Abtasten der Rauheit der Oberfläche des Prüfkörpers 14 verfahren.

Die Messanordnung 11 umfasst einen gemeinsamen Grundkörper 16. Dieser kann bevorzugt aus Granit ausgebildet sein. Auf dem Grundkörper 16 ist ein Stativ 17 vorgesehen, welches an einem Ausleger 18 die Messvorrichtung 12 aufnimmt. Dieses Stativ 12 umfasst einen Antriebsmotor 19, durch welchen die Messvorrichtung 12 aus einer in Figur 1 dargestellten Ausgangsposition 21 in eine Prüfposition 22 verfahrbar ist, in welcher der Eindringkörper 41 auf einem Prüfkörper 14 aufliegt. Beispielsweise kann der Antriebsmotor 19 den Ausleger 18 für eine auf und ab Bewegung entlang einer Führungssäule 23 des Stativs 12 antreiben.

Auf dem Grundkörper 16 ist des Weiteren ein Messtisch 25 vorgesehen. Dieser Messtisch 25 weist eine Messtischaufnahme 26 auf, welche zumindest in X-Richtung gemäß Pfeil 27 verfahrbar angetrieben ist. Auf die Messtischaufnahme 26 wird der Prüfkörper 14 aufgelegt und daran befestigt.

Die Messanordnung 11 kann des Weiteren eine optische Erfassungseinrichtung 29 umfassen, welche ebenfalls an dem Stativ 17 oder vorteilhafterweise getrennt dazu an einem weiteren Stativ 31 angeordnet sein kann. Diese optische Erfassungseinrichtung 29 kann benachbart zur Messvorrichtung 12 positioniert sein. Der Messtisch 25 oder die Messtischaufnahme 26 ist dabei derart verfahrbar ausgestaltet, dass der Prüfkörper 14 nach dem Einbringen einer Eindringstelle oder eines Kratzers in die Oberfläche des Prüfkörpers 14 zur optischen Erfassungseinrichtung 29 verfahrbar ist, damit die Eindringstelle oder der eingebrachte Kratzer in die Oberfläche des Prüfkörpers 14 optisch erfasst werden kann. Alternativ kann auch eine Verfahrbewegung der Messvorrichtung 12 und der optischen Erfassungseinrichtung 29 relativ zum Messtisch 25 vorgesehen sein.

Die Messanordnung 11 umfasst des Weiteren eine schematisch dargestellte Steuerung 33, welche eine nicht näher dargestellte Datenverarbeitungseinrichtung, eine Anzeigevorrichtung 35 und eine Eingabevorrichtung 36 umfasst. Die Steuerung 33 ist zumindest durch Signalleitungen mit dem Stativ 17, der Messvorrichtung 12 und dem Messtisch 25 verbunden. Bevorzugt ist auch die optische Erfassungseinrichtung 29 und gegebenenfalls das die optische Erfassungseinrichtung 29 aufnehmende Stativ 31 daran angeschlossen.

Die Messanordnung 11 weist des Weiteren zur Ansteuerung der Messvorrichtung 12 zumindest eine Pumpe 38 auf, durch welche ein Druckmedium der Messvorrichtung 12 zugeführt wird, um eine Eindringbewegung des Eindringkörpers 41 der Messvorrichtung 12 anzusteuern. Diese Pumpe 38 ist mit einer Signalleitung mit der Steuerung 33 verbunden. Vorteilhafterweise kann die Pumpe 33 das Druckmedium einem Speicherbehälter 39 zuführen, von welchem aus das Druckmedium über eine Förderleitung 40 der Messvorrichtung 12 zugeführt wird. Sowohl die Pumpe 38 als auch der Speicherbehälter 39 sind nicht auf dem gemeinsamen Grundkörper 16 angeordnet.

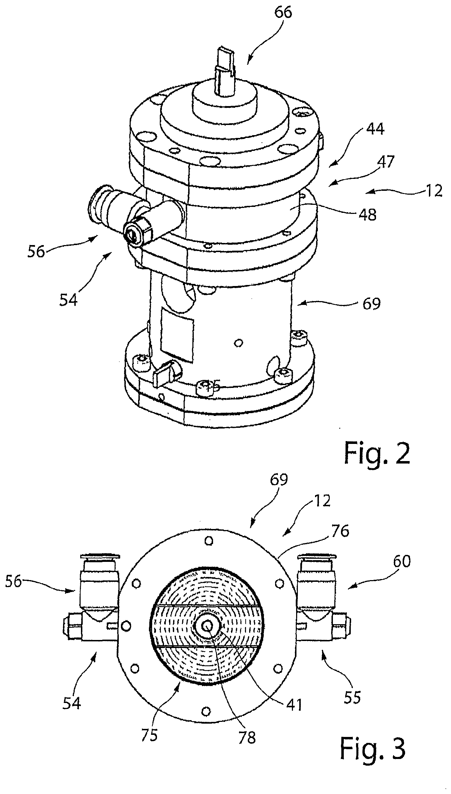

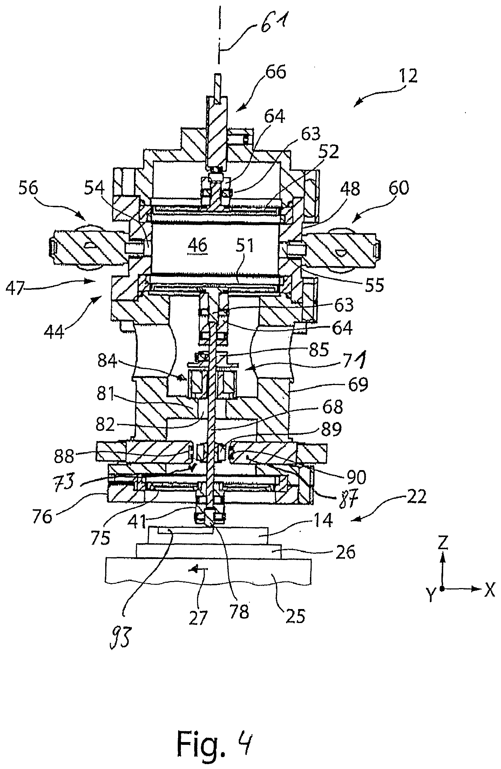

In Figur 2 eine perspektivische Ansicht der erfindungsgemäßen Messvorrichtung 12 dargestellt. Die Figur 3 zeigt eine Ansicht von unten. In Figur 4 ist eine schematische Schnittansicht der Messvorrichtung 12 gemäß Figur 2 dargestellt, worauf insbesondere zur Darlegung des Aufbaus näher Bezug genommen wird.

Diese Messvorrichtung 12 weist eine Krafterzeugungseinrichtung 44 auf, durch welche eine Verfahrbewegung, insbesondere Eindringbewegung, des Eindringkörpers 41 auf die Oberfläche des Prüfkörpers 14 angesteuert wird. Diese Krafterzeugungseinrichtung 44 umfasst eine Druckkammer 46, welche in ein Gehäuse 47 integriert ist. Dieses Gehäuse 47 weist eine zylindrische Gehäusewand 48 auf, welcher eine erste Druckfläche 51 und eine zweite Druckfläche 52 zugeordnet ist. Diese beiden Druckflächen 51, 52 sind vorteilhafterweise durch eine lösbare Verbindung, insbesondere eine Klemm- oder Schraubverbindung, zur Gehäusewand 48 fixiert. Durch die Gehäusewand 48 und die erste und zweite Druckfläche 51, 52 wird die Druckkammer 46 gebildet. Alternativ kann auch eine geschlossene Druckkammer mit daran angeordneten Anschlüssen eingesetzt werden. An der Gehäusewand 48 ist eine Einlassöffnung 54 und eine Auslassöffnung 55 vorgesehen, so dass ein Druckmedium zu- und abgeführt werden kann.

In der zur Einlassöffnung 54 führenden Förderleitung 40 ist bevorzugt ein Einlasssteuerventil 56 vorgesehen. Alternativ ist das Einlassventil 56 direkt an die Einlassöffnung angeschlossen. Zum Abströmen des Druckmediums aus der Druckkammer 46 ist auslassseitig in einer weiteren Förderleitung 58 ein Auslasssteuerventil 60 angeordnet. Dies kann auch direkt an der Auslassöffnung 55 angeschlossen sein.

Die erste und zweite Druckfläche 51, 52 sind bevorzugt als eine Druckmembran, insbesondere gewellte Druckmotoren mit bevorzugt kreisförmigen Wellen, ausgebildet, welche nur in einer Bewegungsrichtung einen Freiheitsgrad aufweisen, der in Z-Richtung ausgerichtet ist und in einer Längsmittelachse 61 der Messvorrichtung 12 liegt. Durch die feste Einspannung der ersten und zweiten Druckfläche 51, 52 zur Gehäusewand 48 ist eine Drehung der Druckflächen 51, 52 um die Z-Achse verhindert.

An jeder der ersten und zweiten Druckfläche 51, 52 ist ein Druckstempel 63 fest angeordnet. Über ein Verbindungselement 64 kann beispielsweise der zweiten Druckfläche 52 zugeordnet ein Sensor 66 befestigt sein. Insbesondere ist der Sensor 66 als Drucksensor ausgebildet, der in Abhängigkeit der Bewegung der zweiten Druckfläche 52 den sich in der Druckkammer 46 befindenden Druck erfasst und an die Steuerung 33 weiterleitet.

Zwischen der ersten Druckfläche 51 und dem Eindringkörper 41 ist ein Übertragungsstift 68 vorgesehen, der sich durch einen Gehäuseabschnitt 69 erstreckt, welcher sich an die Gehäusewand 47 anschließt. Dieser Gehäuseabschnitt 69 ist zylindrisch ausgebildet, so dass darin eine erste Messvorrichtung 71 zur Erfassung einer Verfahrbewegung des Eindringkörpers 41 erfasst wird. Des Weiteren ist in dem Gehäuseabschnitt 69 bevorzugt eine weitere Messvorrichtung 73 angeordnet, welche zumindest eine Auslenkung in X-Richtung des Eindringkörpers 41 während einem Eindringen in die Oberfläche des Prüfkörpers und vorzugsweise einer gleichzeitigen Verfahrbewegung des Prüfkörpers 14 in X-Richtung erfasst. Des Weiteren kann die zumindest eine weitere Messvorrichtung 73 auch eine Auslenkung des Eindringkörpers in Y-Richtung erfassen.

An dem unteren Gehäuseabschnitt 69 ist ein Halteelement 57 vorgesehen, welches den Eindringkörper 41 aufnimmt und sich bis zu einem äußeren Randbereich 76 am Gehäuseabschnitt 69 erstreckt. Dieses Halteelement 75 kann wiederum mit einer lösbaren Verbindung am Gehäuseabschnitt 69 befestigt sein. Das Halteelement 75 ist als eine Druckmembran ausgebildet, welche in zumindest einer Bewegungsrichtung einen Freiheitsgrad aufweist. Dieser zumindest eine Freiheitsgrad liegt in der Z-Achse beziehungsweise der Längsmittelachse 61 der Messvorrichtung 12. Das Halteelement 47 ist bevorzugt, wie dies in Figur 3 dargestellt ist, mit zwei Längsschlitzen versehen. Dadurch wird das Halteelement 75 in einer Richtung parallel zu den Längsschlitzen, welche der X-Achse entsprechen, weich und in einer Y-Achse steif. Da die Haltevorrichtung 75 als Druckmedium ausgebildet ist, weist diese eine sehr geringe Nachgiebigkeit auf und ist bevorzugt nicht in X- und Y-Richtung drucksteif ausgebildet.

Am unteren Ende des Übertragungsstiftes 68 ist der Eindringkörper 41 auswechselbar befestigt. Der Eindringkörper 41 weist eine Eindringspitze 78 auf, welche lösbar an dem Eindringkörper 41 befestigbar ist.

Der Gehäuseabschnitt 69 weist eine Schulter 81 auf, welche eine Durchgangsbohrung 82 bildet, durch welche sich der Übertragungsstift 68 erstreckt. An der Schulter 81 ist ein erstes Sensorelement 84 der ersten Messeinrichtung 71 fest angeordnet, und benachbart dazu ist ein zweites Sensorelement 85 der ersten Messeinrichtung 71 an dem Übertragungsstift 68 angeordnet. Beispielsweise sind das erste und zweite Sensorelement 84, 85 als Abstandssensor ausgebildet, wobei das erste Sensorelement 84 einen Topfmagnet mit einer Spule umfasst und das zweite Sensorelement 85 eine Scheibe aus einem ferritischen Material ist, welches an dem Übertragungsstift 68 befestigt ist. Dieses zweite Sensorelement 85 ist bevorzugt lösbar am Übertragungsstift 68 und im Abstand zum ersten Sensorelement 84 einstellbar, so dass eine Justierung des Eindringkörpers 41 in einer Ausgangsposition möglich ist. Die Messeinrichtung 71 arbeitet nach dem Wirbelstromprinzip.

Die weitere Messeinrichtung 73 umfasst ein an einer Halterung 87 angeordnetes erstes Sensorelement 88, welches ortsfest beziehungsweise gehäusefest vorgesehen ist sowie ein zweites Sensorelement 89, welches wiederum an dem Übertragungsstift 68 angreift. Gemäß einer ersten Ausführungsform kann dieses zweite Sensorelement 89 als Ferritring ausgebildet sein, dem eine Spule gegenüberliegt, die das erste Sensorelement 88 bildet. Dadurch kann eine Ablenkung des Eindringkörpers 41 in X-Richtung erfasst werden, welche während dem Einbringen der Eindringstelle oder des Kratzers durch die Oberfläche auf den Eindringkörper 41 erzeugt und auf den Übertragungsstift 68 übertragen wird. Ergänzend kann auch noch ein drittes Sensorelement 90 vorgesehen sein, um eine Ablenkung in X-Richtung zu erfassen, so dass durch einen Vergleich der erfassten Werte zum ersten und dritten Sensorelement 88, 90 eine verbesserte Aussage über die Abweichung in X-Richtung ermittelt werden kann. Alternativ kann das dritte Sensorelement auch um 90° versetzt zum ersten Sensorelement 88 angeordnet sein, so dass das erste Sensorelement 88 eine Ablenkung in X-Richtung und das dritte Sensorelement 90 eine Ablenkung in Y-Richtung erfasst.

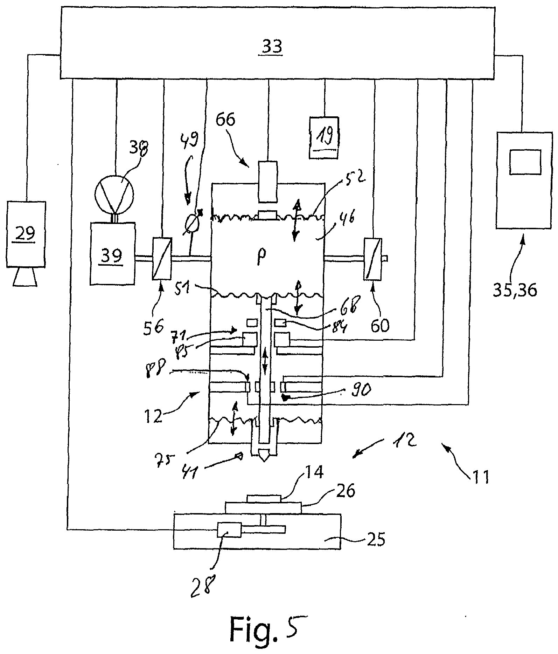

Die Figur 5 zeigt eine schematische Anordnung der einzelnen Komponenten der Messanordnung 11, welche über Steuerleitungen mit der Steuerung 33 verbunden sind. Anhand dieser schematischen Darstellung wird nachfolgend ein Verfahren zur Durchführung einer Härtemessung und ein Verfahren zur Bestimmung der Kratzfestigkeit einer Oberfläche eines Prüfkörpers 14 erörtert.

Für die Härtemessung einer Oberfläche des Prüfkörpers 14 wird der Prüfkörper 14 gemäß Figur 5 auf einer Messtischaufnahme 26 des Messtischs 25 positioniert und fixiert. Die Krafterzeugungseinrichtung 44 ist mit einem Ausgangsdruck beaufschlagt. Beispielsweise kann die Druckkammer 46 mit einem Umgebungsdruck versehen sein. Dies wird dadurch erzielt, dass das Steuerventil 60 geöffnet und das Steuerventil 56 geschlossen ist. Darauffolgend wird die Messvorrichtung 12 auf die Oberfläche des Prüfkörpers 14 entlang der Z-Achse zubewegt, beispielsweise mittels des Motors 19 des Stativs 17. Sobald der Eindringkörper 41 auf der Oberfläche des Prüfkörpers 14 aufsitzt, wird durch die erste Messeinrichtung 71 aufgrund einer nur geringfügigen Längsbewegung beziehungsweise Eintauchbewegung des Eindringkörpers 41 gegenüber dem Gehäuse 47 der Messvorrichtung 12 ein Signal erfasst und die Absenkbewegung der Messvorrichtung 12 entlang der Z-Achse gestoppt. Dabei kann die Eintauchbewegung des Eindringkörpers 41 auf den Übertragungsstift 68 übertragen werden, wodurch das erste Sensorelement 84 gegenüber dem zweiten Sensorelement 85 der ersten Messeinrichtung entfernt wird und somit ein Messsignal ausgibt.

Ausgehend von dieser Startposition für die Härtemessung, bei der der Eindringkörper 41 auf der Oberfläche des Prüfkörpers aufliegt, wird das Auslasssteuerventil 60 geschlossen und das Einlasssteuerventil 56 geöffnet, so dass die Druckkammer 46 mit einem Prüfdruck beaufschlagt wird. Dieser in der Einlassöffnung 54 vorhandene Druck des einströmenden Druckmediums wird mit einem Drucksensor 49 erfasst und an die Steuerung 33 weitergeleitet. Der Aufbau des Drucks in der Druckkammer kann unmittelbar durch die Pumpe 38 erfolgen oder durch den Speicherbehälter 39 bereitgestellt und durch das Einlasssteuerventil 56 geregelt werden.

Während dem Aufbau des Prüfdrucks in der Druckkammer 46 werden die erste und zweite Druckfläche 51, 52 ausgelenkt. Die erste Druckfläche 51 bewirkt eine Eindringbewegung des Eindringkörpers 51 in den Prüfkörper 14. Durch den Prüfdruck wird die zweite Druckfläche 52 in Richtung Sensor 66 bewegt. Die Auslenkung der zweiten Druckfläche 52 wird zum einen durch den Prüfdruck bestimmt, wobei eine Federkonstante des Materials der zweiten Druckfläche 52 diesem Druck anteilig entgegenwirkt. Der Sensor 66 erfasst eine Änderung des Abstandes zur zweiten Druckfläche 52, woraus aufgrund des erfassten Prüfdrucks der Federkonstante der zweiten Druckfläche 52 und des Abstandes, der durch den Drucksensor 66 zur zweiten Druckfläche 52 erfasst wird, die auf den Eindringkörper 41 wirkende Prüfkraft bestimmt wird.

Aufgrund der erfassten Messsignale der ersten Messvorrichtung 71 bezüglich der Eindringbewegung und der tatsächlich ermittelten Prüfkraft kann die Härte der Oberfläche des Prüfkörpers 14 bestimmt werden. In die Bestimmung der Härte der Oberfläche fließt auch die Form beziehungsweise Geometrie des Eindringkörpers 41 ein. Beispielsweise kann der Eindringkörper 41 pyramidenförmig sein. Insbesondere kann dieser aus Diamant, Korund, Topas oder Quarz bestehen.

Nachdem die Eindringbewegung des Eindringkörpers 41 beendet ist, kann beispielsweise die Messvorrichtung 12 vom Prüfkörper 14 abgehoben und anschließend das Aussteuerventil 60 geöffnet werden. Ebenso kann auch zunächst das Auslasssteuerventil 60 geöffnet und dann die Messvorrichtung 12 abgehoben werden oder beides gleichzeitig erfolgen.

Die Messvorrichtung 12 weist am Übertragungsstift 68 und diesem zugeordnet an einem Gehäuseabschnitt eine zweite beziehungsweise weitere Messeinrichtung 73 auf. Während der Eindringbewegung des Eindringkörpers 41 in den Prüfkörper 14 erfolgende Auslenkbewegungen in der Ebene der Oberfläche des Prüfkörpers 14 - also in XY-Richtung - können dadurch ebenfalls erfasst und als weitere Beurteilungsparameter herangezogen werden.

Anschließend nach dem Einbringen einer Eindringstelle in dem Prüfkörper 14 kann mit der optischen Erfassungseinrichtung 29 eine Abbildung der Eindringstelle ermittelt und auch eine optische Auswertung durchgeführt werden.

Zur Ermittlung der Kratzfestigkeit einer Oberfläche eines Prüfkörpers 14 wird der Prüfkörper 14 auf einem Messtisch 25 beziehungsweise einer Messtischaufnahme 26 des Messtischs 25 positioniert. Oberhalb des Prüfkörpers 14 ist die Messvorrichtung 12 positioniert, so dass ein Eindringkörper 41 durch eine Zustellbewegung senkrecht zur Oberfläche des Prüfkörpers 14 auf diesen zubewegt werden kann. Die Druckkammer 46 der Messvorrichtung 12 ist mit einem Ausgangsdruck beaufschlagt. Dieser kann ein Umgebungsdruck sein, der sich beispielsweise einstellt, indem das Einlasssteuerventil 56 geschlossen und das Auslasssteuerventil 60 geöffnet ist. Der Eindringkörper 51 befindet sich in einer Ruhelage oder Aus-Position, in welcher diese durch die erste Druckfläche 51 der Druckkammer 46 und durch das Halteelement 75 positioniert ist. Die Ausgangsposition der Messvorrichtung 12 zum Prüfkörper 14 ist in Figur 5 dargestellt.

Darauffolgend wird die Messvorrichtung 12 auf den Prüfkörper 14 zubewegt. Beispielsweise erfolgt dies durch den Motor 19. Sobald das Aufsetzen des Eindringkörpers 41 auf der Oberfläche des Prüfkörpers 14 durch die erste Messeinrichtung 71 erfasst wird, wird der Motor 19 stillgesetzt. Die Messvorrichtung 12 ist in einer Startposition zum Prüfkörper 14 angeordnet. Diese Startposition kann für einen sogenannten Pre-Scan für die Ermittlung der Kratzfestigkeit vorgesehen sein. Diese Startposition kann auch für eine Messung der Oberflächenrauheit der Oberfläche des Prüfkörpers vorgesehen sein.

Ausgehend von dieser Startposition kann zunächst ein sogenannter Pre-Scan durchgeführt werden, das heißt, dass die Oberfläche des Prüfkörpers 14 entlang einer vorbestimmten Verfahrstrecke des Eindringkörpers 41 abgetastet wird. Diese Verfahrstrecke ist tangential oder rechtwinklig zum Prüfkörper 14 und beispielsweise entlang der X-Achse ausgerichtet. Bevorzugt steht die Messvorrichtung 12 still, und der Messtisch 25 wird durch einen Motor 28 in Pfeilrichtung 27 gemäß Figur 4 verfahren, wodurch die Lage der Oberfläche und die Kontur der Oberfläche abgetastet und die Messsignale als Vorkratz-Profildaten, auch Pre-Scan genannt, abgespeichert werden. Anschließend wird die Messvorrichtung 12 von dem Prüfkörper 14 abgehoben. Die Messvorrichtung 12 und der Messtisch 25 werden wieder in der Startposition positioniert. Darauffolgend wird wiederum durch die Steuerung 33 dieselbe Verfahrbewegung wie beim Pre-Scan gemäß Pfeil 27 mittels des Motors 28 angetrieben. Zeitgleich mit dieser Verfahrbewegung wird die Druckkammer 46 mit einem Prüfdruck beaufschlagt, wodurch der Eindringkörper 41 während der Verfahrbewegung des Messtischs 25 zunehmend in die Oberfläche des Prüfkörpers 14 eindringt. Diese Eindringbewegung wird durch die erste Messvorrichtung 71 erfasst. Gleichzeitig wird über den Sensor 66 der tatsächlich herrschende Prüfdruck während der Verfahrbewegung erfasst. Ergänzend wird eine Auslenkung des Eindringkörpers 44 in Richtung Pfeil 27 - also in Verfahrrichtung - mittels der weiteren Messvorrichtung 73, insbesondere dem ersten und zweiten Sensorelement 88, 89, über die Steuerung 33 erfasst. Am Ende der vorbestimmten Verfahrbewegung nach Aufbringen der vorbestimmten Prüfkraft wird die Messvorrichtung 14 wiederum vom Prüfkörper 12 abgehoben. Die während dem Einbringen des Kratzers 93 (Figur 4) erfassten Messsignale werden durch die Steuerung 33 abgespeichert und ausgewertet, um die Kratzfestigkeit zu bestimmen.

Die Messvorrichtung 12 und der Messtisch 25 können nach dem Einbringen des Kratzers 93 in den Prüfkörper 14 wieder in die Startposition zurückgeführt werden. Darauffolgend kann ein Post-Scan erfolgen. Der Eindringkörper 41 wird im Kratzer 93 positioniert. Es erfolgt wiederum eine Verfahrbewegung des Messtisches 25 gemäß Pfeil 27, wodurch der Eindringkörper 41 entlang des Kratzers 93 geführt wird. Während der Verfahrbewegung des Eindringkörpers 41 in den Kratzer 93 werden die Messsignale wieder von der ersten Messeinrichtung 71 und der weiteren Messeinrichtung 73 und/oder des Sensors 66 erfasst.

Ergänzend kann während dem Pre-Scan, dem Einbringen des Kratzers 93 und/oder dem Post-Scan mittels eines dritten Sensors 90 der weiteren Messeinrichtung 73 eine Auslenkung des Eindringkörpers 41 in Y-Richtung erfasst werden. Alternativ kann dieses dritte Sensorelement 90 auch ergänzend zum ersten Sensorelement 88 eine Ablenkung in X-Richtung erfassen.

Nach dem Einbringen des Kratzers 93 und/oder nach dem Post-Scan kann die optische Erfassungseinrichtung 29 den Kratzer erfassen und ergänzend eine optische Auswertung zu ermöglichen.

Ausgehend von der vorbeschriebenen Startposition, bei der der Eindringkörper 41 auf der Oberfläche des Prüfkörpers 14 aufgesetzt ist, kann die Messung der Oberflächenrauheit durchgeführt werden. Der Eindringkörper 41 wird entlang einer vorbestimmten Verfahrstrecke auf der Oberfläche des Prüfkörpers 14 bewegt. Diese Verfahrstrecke ist tangential oder rechtwinklig zum Prüfkörper 14 und beispielsweise entlang der X-Achse ausgerichtet. Dabei kann die Messvorrichtung 12 stillstehen, und der Messtisch 25 wird - wie in Figur 4 dargestellt - durch einen Motor 28 in Pfeilrichtung 27 verfahren. Alternativ kann auch der Messtisch 25 stillstehen und die Messvorrichtung 12 verfahren werden. Ebenso ist eine Relativbewegung von Messtisch 25 und Messvorrichtung 12 möglich. Die durch die Oberflächenrauheit des Prüfkörpers 14 erzeugte Verfahrbewegung des Eindringkörpers 41 entlang der Längsachse des Gehäuses 47 beziehungsweise der Z-Achse wird durch den Übertragungsstift 48 und der Druckkammer 46 übertragen, wodurch eine Wegänderung zwischen der zweiten Druckfläche 52 und dem Sensor 66 erfasst und mittels der Steuerung 33 ausgewertet wird. Nach dem Abtasten einer vorbestimmten Verfahrstrecke entlang der Oberfläche des Prüfkörpers 14 wird die Messvorrichtung 12 wiederum von dem Prüfkörper 14 abgehoben.

## Patentansprüche

1. Anspruch 1. Messvorrichtung zur Erfassung von Messsignalen während einer Eindringbewegung eines Eindringkörpers (41) in eine Oberfläche eines Prüfkörpers (14), für die Ermittlung der Kratzfestigkeit der Oberfläche des Prüfkörpers (14) oder während einer Abtastbewegung des Eindringkörpers (41) auf der Oberfläche des Prüfkörpers (14) zur Ermittlung der Oberflächenrauheit, mit einem Gehäuse (47), welches eine Krafterzeugungseinrichtung (44) aufweist, welche mit einem Eindringkörper (41) zur Erzeugung einer Verfahrbewegung des Eindringkörpers (41) entlang einer Längsachse des Gehäuses (47) wirkverbunden ist und eine Eindringbewegung des Eindringkörpers (41) in eine zu prüfende Oberfläche des Prüfkörpers (14) ansteuert oder den Eindringkörper (41) auf der Oberfläche des Prüfkörpers (14) zum Abtasten positioniert und mit zumindest einer ersten Messeinrichtung (71) zur Messung der Eindringtiefe in die Oberfläche des Prüfkörpers (14) oder einer Verfahrbewegung des Eindringkörpers (41) längs der Längsachse des Gehäuses (47) während einer Abtastbewegung auf der Oberfläche des Prüfkörpers (14), **dadurch gekennzeichnet,**
- **dass** die Krafterzeugungseinrichtung (44) mittels einem gasförmigen Druckmedium für die Eindringbewegung des Eindringkörpers (41) angesteuert ist,
- **dass** die Krafterzeugungseinrichtung (44) eine Druckkammer (46) mit zumindest einer ersten Druckfläche (51) aufweist, die mit dem Eindringkörper (41) wirkverbunden ist,
- **dass** die Druckkammer (46) eine zweite Druckfläche (52) aufweist, die der ersten Druckfläche (51) gegenüberliegt,
- **dass** die erste und zweite Druckfläche (51, 52) als eine Druckmembran ausgebildet sind, die parallel zueinander ausgerichtet und an der Umfangswand des Gehäuses (47) befestigt sind,
- **dass** die erste und zweite Druckfläche (51, 52) eine Bewegungsfreiheit in nur einem Freiheitsgrad aufweisen,
- **dass** zwischen der ersten Druckfläche (51) und dem Eindringkörper (41) die erste Messeinrichtung (71) zur Messung der Verfahrbewegung des Eindringkörpers (41) vorgesehen ist,
- **dass** zwischen der ersten Druckfläche (51) und dem Eindringkörper (41) eine weitere Messeinrichtung (73) zur Erfassung von zumindest einer Auslenkung des Eindringkörpers entlang der Achse der Verfahrbewegung des Prüfkörpers (14) relativ zum Eindringkörper (41) vorgesehen ist,
- **dass** die erste Messeinrichtung (71) und die zumindest eine weitere Messeinrichtung (73) in einem sich an die Druckkammer (46) anschließenden Gehäuseabschnitt (69) des Gehäuses (47) vorgesehen sind, und
- **dass** an einem unteren Randbereich des Gehäuseabschnitts (69) des Gehäuses (47) und zur ersten Druckfläche (51) beabstandet ein Halteelement (75) vorgesehen ist, welches den Eindringkörper (41) aufnimmt.

2. Messvorrichtung nach einem der vorhergehenden Ansprüche,
**dadurch gekennzeichnet, dass** die Krafterzeugungseinrichtung (44) zumindest eine Pumpe (38) aufweist, welche das Druckmedium der Druckkammer (46) zuführt und vorzugsweise das Druckmedium Druckluft ist.

3. Messvorrichtung nach einem der Ansprüche 1 oder 2, **dadurch gekennzeichnet, dass** die Druckkammer (46) in einem Gehäuse (47) vorgesehen ist, welche durch eine Seiten- oder Umfangswand des Gehäuses (47) gebildet ist, an der die Einlassöffnung (54) und die Auslassöffnung (55) vorgesehen sind und welche an der Unterseite die erste Druckfläche (51) und an der Oberseite die zweite Druckfläche (52) aufnimmt oder dass die Druckkammer (46) als eine Druckdose ausgebildet ist, welche in das Gehäuse (47) einsetzbar ist..

4. Messvorrichtung nach einem der vorhergehenden Ansprüche,
**dadurch gekennzeichnet, dass** der zweiten Druckfläche (52), vorzugsweise außerhalb der Druckkammer (46), ein Sensor (66), insbesondere zur Erfassung einer Auslenkbewegung der zweiten Druckfläche (52), zugeordnet ist.

5. Messvorrichtung nach einem der vorhergehenden Ansprüche,
**dadurch gekennzeichnet, dass** das Halteelement (75) als eine Druckmembran ausgebildet ist und eine Bewegungsfreiheit in zumindest einem Freiheitsgrad aufweist, insbesondere in dem Freiheitsgrad der ersten und zweiten Druckfläche (51, 52) und vorzugsweise
in seiner Erstreckungsebene zumindest in Richtung der Auslenkung des Eindringkörpers (41) weich und in einer Richtung senkrecht dazu steif ausgebildet ist.

6. Messvorrichtung nach einem der vorhergehenden Ansprüche,
**dadurch gekennzeichnet, dass** das Halteelement (75) parallel zur ersten und zweiten Druckfläche (51, 52) ausgerichtet ist.

7. Messvorrichtung nach einem der vorhergehenden Ansprüche,
**dadurch gekennzeichnet, dass** die erste und/oder zweite Druckfläche (51, 52) und/oder das Halteelement (75) aus Kupfer-Beryllium bestehen.

8. Messvorrichtung nach einem der vorhergehenden Ansprüche,
**dadurch gekennzeichnet, dass** zwischen der ersten Druckfläche (51) und dem Eindringkörper (41) ein Übertragungsstift (68) vorgesehen und vorzugsweise eine starre Verbindung zwischen der ersten Druckfläche (51) und dem Eindringkörper (41) gebildet ist.

9. Messvorrichtung nach einem der vorhergehenden Ansprüche,
**dadurch gekennzeichnet, dass** die erste Messeinrichtung (71) und die zumindest eine weitere Messeinrichtung (73) aus jeweils zumindest zwei relativ zueinander bewegbaren Sensorelementen (84, 85; 88, 89) bestehen und jeweils zumindest eines der Sensorelemente (84, 88) feststehend an dem Gehäuse (47) und das zumindest eine weitere Sensorelement (85, 89) an dem Übertragungsstift (68) angeordnet sind und vorzugsweise
die erste Messeinrichtung (71) und/oder die weitere Messeinrichtung (73) nach dem Wirbelstromprinzip arbeitet.

10. Messanordnung zum Erfassen einer Eindringtiefe in einer Oberfläche eines Prüfkörpers (14), insbesondere zur Erfassung der Kratzfestigkeit einer Oberfläche eines Prüfkörpers (14), oder zum Erfassen einer Oberflächenrauheit einer Oberfläche eines Prüfkörpers (14),
- mit einem Messtisch (25) zur Aufnahme des Prüfkörpers (14),
- mit einer Handhabungseinrichtung (17) zum Überführen einer Messvorrichtung (12) aus einer Ausgangsposition (21) in eine Messposition (22),
- mit einem Grundkörper (16), auf dem zumindest der Messtisch (25) und die Handhabungseinrichtung (17) vorgesehen sind,
- mit einer Steuerung (33) zur Ansteuerung und Durchführung einer Messung mit der Messvorrichtung (12) an dem Prüfkörper (14), welche ein Aufsetzen eines Eindringkörpers (41) der Messvorrichtung (12) auf dem Prüfkörper (14) mit der Handhabungsvorrichtung (17) ansteuert, **dadurch gekennzeichnet, dass** die Eindringbewegung des Eindringkörpers (41) in die Oberfläche des Prüfkörpers (14) oder die Abtastbewegung des Eindringkörpers (41) auf der Oberfläche des Prüfkörpers (14) mit der Messvorrichtung (12) nach einem der Ansprüche 1 bis 9 vorgesehen ist.

11. Messanordnung nach Anspruch 11, **dadurch gekennzeichnet, dass**
die optische Erfassungseinrichtung (29) benachbart zur Messvorrichtung (12) auf dem Grundkörper (16) angeordnet ist, wobei der Messtisch (25) zwischen der Messvorrichtung (12) und der optischen Erfassungseinrichtung (29) verfahrbar oder die Messvorrichtung (12) und die optische Erfassungseinrichtung (49) zum Messtisch (25) verfahrbar sind und vorzugsweise die
Verfahrbewegung des Messtisches (25), insbesondere entlang einer in der Ebene der Oberfläche des Prüfkörpers (14) liegenden Achse, durch die Steuerung (33) angesteuert ist.

12. Messanordnung nach Anspruch 10, **dadurch gekennzeichnet, dass** zumindest eine Pumpe (38) vorgesehen ist, welche mit einer Förderleitung (40) das Druckmedium der Messvorrichtung (12) zuführt.

13. Verfahren zum Erfassen von Messsignalen während einer Eindringbewegung eines Eindringkörpers (41) in eine Oberfläche eines Prüfkörpers (14) einer Messvorrichtung (12), oder während einer Abtastbewegung eines Eindringkörpers (41) auf einer Oberfläche eines Prüfkörpers (14), nach einem der Ansprüche 1 bis 9, bei dem der Prüfkörper (14) auf einem Messtisch (25) positioniert und die Messvorrichtung (12) auf den Prüfkörper (14) in einer Startposition aufgesetzt wird, **dadurch gekennzeichnet, dass** die Eindringbewegung oder die Abtastbewegung des Eindringkörpers (41) mit einer Krafterzeugungseinrichtung (44) angesteuert wird, welche mit einem Prüfdruck eines gasförmigen Druckmediums für die Eindringbewegung des Eindringkörpers (41) in den Prüfkörper (14) oder welche mit einem Prüfdruck für die Abtastbewegung auf dem Prüfkörper (14) beaufschlagt wird.

14. Verfahren nach Anspruch 13, **dadurch gekennzeichnet, dass** die Krafterzeugungseinrichtung (44) vor dem Eindringen des Eindringkörpers (41) auf die Oberfläche des Prüfkörpers (14) mit einem Ausgangsdruck beaufschlagt wird, dass die Messvorrichtung (12) auf den Prüfkörper (14) zubewegt wird, dass bei einem Aufsetzen des Eindringkörpers (41) auf den Prüfkörper (14) die Verfahrbewegung der Messvorrichtung (12) stillgesetzt wird, dass die Krafterzeugungseinrichtung (44) mit dem Prüfdruck beaufschlagt wird und eine Eindringbewegung des Eindringkörpers (41) in die Oberfläche des Prüfkörpers (14) mit einer ersten Messvorrichtung (71) erfasst wird.

15. Verfahren nach Anspruch 13 oder 14, **dadurch gekennzeichnet, dass** die Druckkammer (46) als Krafterzeugungseinrichtung (44) eingesetzt wird und eine Eindringbewegung des Eindringkörpers (41) mit einer ersten Druckfläche (51) angesteuert und gegenüberliegend eine zweite Druckfläche (42) relativ zu einem Sensor (66) bewegt wird, dass durch den Sensor (66) die auf den Eindringkörper (41) wirkende Kraft erfasst wird und dass durch die erste Messeinrichtung (71) die Eindringtiefe des Eindringkörpers (41) in den Prüfkörper (14) erfasst und dass aus der erfassten Eindringkraft durch den Sensor (66) und der erfassten Eindringtiefe durch die erste Messvorrichtung (71) in Abhängigkeit der Geometrie des Eindringkörpers (41) die Härte der Oberfläche des Prüfkörpers (14) bestimmt wird.

16. Verfahren nach einem der Ansprüche 13 bis 15, **dadurch gekennzeichnet, dass** während der mit dem Prüfdruck angesteuerten Eindringbewegung des Eindringkörpers (41) in dem Prüfkörper (14) der Messtisch (25) in einer Richtung senkrecht zur Eindringbewegung des Eindringkörpers (41) verfahren und ein Kratzer (93) in die Oberfläche des Prüfkörpers (14) eingebracht wird und die Messsignale der ersten Messeinrichtung (71) für die Eindringtiefe und die Messsignale einer weiteren, den Eindringkörper (41) zugeordneten Messeinrichtung (73) eine Auslenkung des Eindringkörpers (41) entlang der Verfahrrichtung des Prüfkörpers (14) sowie die Messsignale des Sensors (66) erfassen und auswerten und vorzugsweise
während einer Eindringbewegung des Eindringkörpers (41) in den Prüfkörper (14) und einer Verfahrbewegung des Messtischs (25) zur Bildung eines Kratzers (93) mit einem dritten Sensorelement (88) einer weiteren Messeinrichtung (73) eine Auslenkbewegung des Eindringkörpers (41) rechtwinklig zur Verfahrbewegung des Prüfkörpers (14) erfasst wird und insbesondere
vor dem Einbringen des Kratzers (93) in den Prüfkörper (14) die Messvorrichtung (12) auf der Oberfläche des Prüfkörpers (14) aufgesetzt und in einer Richtung senkrecht zur Aufsetzbewegung des Prüfkörpers (14) verfahren wird und die durch die erste Messeinrichtung (71) erfassten Messsignale erfasst und als Vorkratz-Profildaten gespeichert werden und vorzugsweise
nach dem Einbringen des Kratzers (93) in den Prüfkörper (14) die Messvorrichtung (12) in dem Kratzer (39) aufgesetzt und der Eindringkörper (41) mit der Messvorrichtung (12) in einer Richtung senkrecht zur Aufsetzbewegung des Prüfkörpers verfahren wird und die durch die Messvorrichtung (12) erfassten Signale entlang der Verfahrbewegung des Eindringkörpers (41) in dem Kratzer (93) erfasst und als Nachkratz-Profildaten gespeichert werden.

17. Verfahren nach Anspruch 13, **dadurch gekennzeichnet, dass** der Prüfdruck in der Krafterzeugungseinrichtung (44) während der Abtastbewegung des Eindringkörpers (41) konstant gehalten wird.

## Claims

1. Measuring device for detecting measurement signals during a penetration movement of a penetration body (41) into a surface of a test body (14), for identifying the scratch resistance of the surface of the test body (14) or during a scanning movement of the penetration body (41) on the surface of the test body (14), in particular for identifying the surface roughness, having a housing (47) which has a force generating apparatus (44) which is operatively connected to a penetration body (41) for generating a travelling movement of the penetration body (41) along a longitudinal axis of the housing (47) and a controls a penetration movement of the penetration body (41) into a surface to be tested of the test body (14) or positions the penetration body (41) on the surface of the test body (14) for scanning and to at least one first measuring apparatus (71) for measuring the depth of penetration into the surface of the test body (14) or a travelling movement of the penetration body (41) along the longitudinal axis of the housing (47) during a scanning movement on the surface of the test body (14), **characterised in**
- **that** the force generating apparatus (44) is controlled by means of a gaseous pressure medium for the penetration movement of the penetration body (41),
- **that** the force generating apparatus (44) has a pressure chamber (46) having at least one first pressure surface (51), said force generating apparatus being operatively connected to the penetration body (41),
- **that** the pressure chamber (46) has a second pressure surface (52) which is opposite the first pressure surface (51),
- **that** the first and second pressure surfaces (51, 52) are formed as a pressure membrane, which are orientated parallel to each other and are preferably fastened on the peripheral wall of the housing (47),
- **that** the first and second pressure surfaces (51, 52) have freedom of movement in only one degree of freedom,
- **that** the first measuring device (71) for measuring the travelling movement of the penetration body (41) is provided between the first pressure surface (51) and the penetration body (41),
- **that** a further measuring device (73) is provided between the first pressure surface (51) and the penetration body (41) for detecting at least one displacement of the penetration body along the axis of the travelling movement of the test body (14) relative to the penetration body (41),
- **that** the first measuring device (71) and the at least one further measuring device (73) are provided in a housing portion (69) of the housing (47), said housing portion adjoining the pressure chamber (46), and
- **that** a holding element (75) which accommodates the penetration body (41) is provided on a lower peripheral region of the housing portion (69) of the housing (47) and at a distance from the first pressure surface (51).

2. Measuring device according to one of the preceding claims, **characterised in that** the force generating apparatus (44) has at least one pump (38) which delivers the pressure medium to the pressure chamber (46), and preferably the pressure medium is pressurised air.

3. Measuring device according to one of claims 1 or 2, **characterised in that** the pressure chamber (46) is provided in a housing (47), which is formed by a side wall or peripheral wall of the housing (47), on which the inlet opening (54) and the outlet opening (55) are provided and which accommodates the first pressure surface (51) on the lower side and the second pressure surface (52) on the upper side or that the pressure chamber (46) is formed as a pressurised can which is insertable into the housing (47) .

4. Measuring device according to one of the preceding claims, **characterised in that** a sensor (66), in particular for detecting a displacement movement of the second pressure surface (52), is assigned to the second pressure surface (52), preferably outside of the pressure chamber (46).

5. Measuring device according to one of the preceding claims, **characterised in that** the holding element (75) is formed as a pressure membrane and has freedom of movement in at least one degree of freedom, in particular in the degree of freedom of the first and second pressure surface (51, 52) and preferably is formed in its extension plane to be soft at least in the direction of the displacement of the penetration body (41) and rigid in a direction which is perpendicular thereto.

6. Measuring device according to one of the preceding claims, **characterised in that** the holding element (75) is orientated parallel to the first and second pressure surface (51, 52).

7. Measuring device according to one of the preceding claims, **characterised in that** the first and/or second pressure surface (51, 52) and/or the holding element (75) consist of copper-beryllium.

8. Measuring device according to one of the preceding claims, **characterised in that** a transmission pin (68) is provided between the first pressure surface (51) and the penetration body (41) and a rigid connection between the first pressure surface (51) and the penetration body (41) is preferably formed.

9. Measuring device according to one of the preceding claims, **characterised in that** the first measuring device (71) and the at least one further measuring device (73) consist of at least two sensor elements (84, 85; 88, 89) which are moveable relative to one another and in each case at least one of the sensor elements (84, 88) is arranged fixedly on the housing (47) and the at least one further sensor element (85, 89) is arranged on the transmission pin (68), and preferably the first measuring device (71) and/or the further measuring device (73) operates according to the eddy current principle.

10. Measuring arrangement for detecting a depth of penetration in a surface of a test body (14), in particular for detecting the scratch resistance of a surface of a test body (14), or for detecting a surface roughness of a surface of a test body (14),
- having a measuring table (25) for accommodating the test body (14),
- having a handling apparatus (17) for transferring a measuring device (12) from an initial position (21) into a measuring position (22),
- having a base body (16) on which at least the measuring table (25) and the handling apparatus (17) are provided,
- having a controller (33) for controlling and carrying out a measurement with the measuring device (12) on the test body (14), which controls a placement of a penetration body (41) of the measuring device (12) on the test body (14) with the handling device (17), **characterised in that** the penetration movement of the penetration body (41) into the surface of the test body (14) or the scanning movement of the penetration body (41) on the surface of the test body (14) with the measuring device (12) is provided according to one of claims 1 to 9.

11. Measuring device according to claim 11, **characterised in that** the optical detection apparatus (29) is arranged adjacently to the measuring device (12) on the base body (16), wherein the measuring table (25) is transportable between the measuring device (12) and the optical detection apparatus (29) or the measuring device (12) and the optical detection apparatus (49) are transportable relative to the measuring table (25) and preferably the travelling movement of the measuring table (25), in particular along an axis in the plane of the surface of the test body (14), is controlled by the controller (33).

12. Measuring arrangement according to claim 10, **characterised in that** at least one pump (38) is provided which delivers the pressure medium to the measuring device (12) with a delivery line (40).

13. Method for detecting measurement signals during a penetration movement of a penetration body (41) into a surface of a test body (14) of a measuring device (12), or during a scanning movement of a penetration body (41) on a surface of a test body (14), in particular according to one of claims 1 to 9, in which the test body (14) is positioned on a measuring table (25) and the measuring device (12) is placed on the test body (14) in a start position, **characterised in that** the penetration movement or the scanning movement of the penetration body (41) is controlled with a force generating apparatus (44) which is supplied with a test pressure of a gaseous pressure medium for the penetration movement of the penetration body (41) into the test body (14) or which is supplied with a test pressure for the scanning movement on the test body (14).

14. Method according to claim 13, **characterised in that** the force generating apparatus (44) is supplied with an initial pressure before the penetration of the penetration body (41) onto the surface of the test body (14), the measuring device (12) is moved towards the test body (14), the travelling movement of the measuring device (12) is stopped during placement of the penetration body (41) onto the test body (14), the force generating apparatus (44) is supplied with the test pressure and a penetration movement of the penetration body (41) into the surface of the test body (14) is detected with a first measuring device (71).

15. Method according to claim 13 or 14, **characterised in that** the pressure chamber (46) is used as a force generating apparatus (44) and a penetration movement of the penetration body (41) is controlled with a first pressure surface (51) and, opposite, a second pressure surface (42) is moved relative to a sensor (66), the force acting on the penetration body (41) is detected by the sensor (66) and the depth of penetration of the penetration body (41) into the test body (14) is detected by the first measuring device (71) and the hardness of the surface of the test body (14) is determined from the detected penetration force by the sensor (66) and the detected depth of penetration depth by the first measuring device (71), depending on the geometry of the penetration body (41).

16. Method according to one of claims 13 to 15, **characterised in that**, during the penetration movement of the penetration body (41) in the test body (14), the measuring table (25) is transported in a direction perpendicular to the penetration movement of the penetration body (41) and a scratch (93) is introduced into the surface of the test body (14) and the measuring signals of the first measuring device (71) for the depth of penetration and the measuring signals of a further measuring device (73) assigned to the penetration body (41) detect and evaluate a displacement of the penetration body (41) along the travelling direction of the test body (14) as well as the measuring signals of the sensors (66) and preferably during a penetration movement of the penetration body (41) into the test body (14) and a travelling movement of the measuring table (25) for forming a scratch (93), a travelling movement of the penetration body (41) at a right angle to the travelling movement of the test body (14) is detected with a third sensor element (88) of a further measuring device (73) and in particular before the introduction of the scratch (93) into the test body (14), the measuring device (12) is placed on the surface of the test body (14) and transported in a direction perpendicular to the placing movement of the test body (14) and the measuring signals detected by the first measuring device (71) are detected and saved as pre-scratching profile data and preferably after the introduction of the scratch (93) into the test body (14), the measuring device (12) is placed in the scratch (39) and the penetration body (41) is transported with the measuring device (12) in a direction perpendicular to the placing movement of the test body and the signals detected by the measuring device (12) along the travelling movement of the penetration body (41) in the scratch (93) are detected and saved as post-scratching profile data.

17. Method according to claim 13, **characterised in that** the test pressure in the force generating apparatus (44) is kept constant during the scanning movement of the penetration body (41).

## Revendications

1. Dispositif de mesure destiné à saisir des signaux de mesure pendant un mouvement de pénétration d'un corps de pénétration (41) dans une surface d'un corps testé (14) en vue de déterminer la résistance aux rayures de la surface du corps testé (14), ou pendant un mouvement de balayage du corps de pénétration (41) sur la surface du corps testé (14) en vue de déterminer la rugosité de surface, pourvu d'un boîtier (47) qui présente un dispositif générateur de force (44) qui est relié de manière opérationnelle à un corps de pénétration (41) en vue de générer un mouvement de déplacement du corps de pénétration (41) le long d'un axe longitudinal du boîtier (47) et qui active un mouvement de pénétration du corps de pénétration (41) dans une surface à tester du corps testé (14), ou qui positionne le corps de pénétration (41) sur la surface du corps testé (14) en vue de procéder au balayage, et pourvu d'au moins un premier organe de mesure (71) destiné à mesurer la profondeur de pénétration dans la surface du corps testé (14) ou destiné à mesurer un mouvement de déplacement du corps de pénétration (41) le long de l'axe longitudinal du boîtier (47) pendant un mouvement de balayage effectué sur la surface du corps testé (14), **caractérisé en ce que**
- le dispositif générateur de force (44) est activé au moyen d'un fluide de compression gazeux en vue de générer le mouvement de pénétration du corps de pénétration (41),
- le dispositif générateur de force (44) présente une chambre de pression (46) pourvue d'au moins une première surface de pression (51) qui est reliée de manière opérationnelle au corps de pénétration (41),
- la chambre de pression (46) présente une deuxième surface de pression (52) qui est située à l'opposé de la première surface de pression (51),
- la première et la deuxième surface de pression (51, 52) sont réalisées respectivement sous la forme d'une membrane de pression, lesquelles sont orientées parallèlement l'une à l'autre et sont fixées à la paroi circonférentielle du boîtier (47),
- la première et la deuxième surface de pression (51, 52) présentent une liberté de mouvement à un seul degré de liberté,
- entre la première surface de pression (51) et le corps de pénétration (41) est prévu le premier organe de mesure (71) destiné à mesurer le mouvement de déplacement du corps de pénétration (41),
- entre la première surface de pression (51) et le corps de pénétration (41) est prévu un autre organe de mesure (73) destiné à saisir au moins une déviation du corps de pénétration le long de l'axe du mouvement de déplacement du corps testé (14) par rapport au corps de pénétration (41),
- le premier organe de mesure (71) et ledit au moins un autre organe de mesure (73) sont prévus dans une partie de boîtier (69) du boîtier (47) qui est contiguë à la chambre de pression (46), et
- sur une zone périphérique inférieure de la partie de boîtier (69) du boîtier (47) et à une distance donnée de la première surface de pression (51) est prévu un élément de retenue (75) qui reçoit le corps de pénétration (41).

2. Dispositif de mesure selon l'une quelconque des revendications précédentes, **caractérisé en ce que** le dispositif générateur de force (44) présente au moins une pompe (38) qui fournit le fluide de compression à la chambre de pression (46) et **en ce que** de préférence le fluide de compression est de l'air comprimé.

3. Dispositif de mesure selon l'une quelconque des revendications 1 ou 2, **caractérisé en ce que** la chambre de pression (46) est prévue dans un boîtier (47) et est formée par une paroi latérale ou paroi circonférentielle du boîtier (47) sur laquelle sont prévus l'orifice d'entrée (54) et l'orifice de sortie (55), et reçoit, sur la face inférieure, la première surface de pression (51) et, sur la face supérieure, la deuxième surface de pression (52), ou **en ce que** la chambre de pression (46) est réalisée sous la forme d'une boîte de pression qui peut être insérée dans le boîtier (47).

4. Dispositif de mesure selon l'une quelconque des revendications précédentes, **caractérisé en ce qu'**un capteur (66), en particulier destiné à saisir un mouvement de déviation de la deuxième surface de pression (52), est affecté à la deuxième surface de pression (52), de préférence à l'extérieur de la chambre de pression (46).

5. Dispositif de mesure selon l'une quelconque des revendications précédentes, **caractérisé en ce que** l'élément de retenue (75) est réalisé sous la forme d'une membrane de pression et présente une liberté de mouvement à au moins un degré de liberté, en particulier dans le degré de liberté de la première et de la deuxième surface de pression (51, 52), et est réalisé, de préférence dans son plan d'extension, de manière souple au moins dans la direction de la déviation du corps de pénétration (41) et de manière rigide dans une direction perpendiculaire à celle-ci.

6. Dispositif de mesure selon l'une quelconque des revendications précédentes, **caractérisé en ce que** l'élément de retenue (75) est orienté parallèlement à la première et à la deuxième surface de pression (51, 52) .

7. Dispositif de mesure selon l'une quelconque des revendications précédentes, **caractérisé en ce que** la première et/ou la deuxième surface de pression (51, 52) et/ou l'élément de retenue (75) sont constitués en cuprobéryllium.

8. Dispositif de mesure selon l'une quelconque des revendications précédentes, **caractérisé en ce qu'**une tige de transmission (68) est prévue entre la première surface de pression (51) et le corps de pénétration (41) et **en ce que** de préférence un assemblage rigide est formé entre la première surface de pression (51) et le corps de pénétration (41) .

9. Dispositif de mesure selon l'une quelconque des revendications précédentes, **caractérisé en ce que** le premier organe de mesure (71) et ledit au moins un autre organe de mesure (73) sont constitués respectivement d'au moins deux éléments capteurs (84, 85; 88, 89) pouvant se déplacer l'un vers l'autre et **en ce que** respectivement au moins un desdits éléments capteurs (84, 88) est disposé de manière fixe sur le boîtier (47) et que ledit au moins un autre élément capteur (85, 89) est disposé sur la tige de transmission (68) et **en ce que** de préférence le premier organe de mesure (71) et/ou ledit autre organe de mesure (73) fonctionnent selon le principe des courants de Foucault.

10. Système de mesure destiné à saisir une profondeur de pénétration dans une surface d'un corps testé (14), en particulier destiné à saisir la résistance aux rayures d'une surface d'un corps testé (14) ou destiné à saisir une rugosité de surface d'une surface d'un corps testé (14), ledit système étant pourvu
- d'une table de mesure (25) destinée à recevoir le corps testé (14),
- d'un dispositif de manipulation (17) destiné à faire passer un dispositif de mesure (12) d'une position initiale (21) à une position de mesure (22),
- d'un corps de base (16) sur lequel sont prévus au moins la table de mesure (25) et le dispositif de manipulation (17),
- d'une commande (33) destinée à activer et à effectuer, grâce au dispositif de mesure (12), une mesure sur le corps testé (14), laquelle active, grâce au dispositif de manipulation (17), une pose d'un corps de pénétration (41) du dispositif de mesure (12) sur le corps testé (14), **caractérisé en ce que** le mouvement de pénétration du corps de pénétration (41) dans la surface du corps testé (14) ou le mouvement de balayage du corps de pénétration (41) sur la surface du corps testé (14) est prévu grâce au dispositif de mesure (12) selon l'une quelconque des revendications 1 à 9.

11. Système de mesure selon la revendication 11, **caractérisé en ce que** le dispositif de saisie optique (29) est disposé sur le corps de base (16) de manière contiguë au dispositif de mesure (12), la table de mesure (25) pouvant être déplacée entre le dispositif de mesure (12) et le dispositif de saisie optique (29), ou le dispositif de mesure (12) et le dispositif de saisie optique (49) pouvant être déplacés par rapport à la table de mesure (25), et **en ce que** de préférence le mouvement de déplacement de la table de mesure (25), en particulier le long d'un axe situé dans le plan de la surface du corps testé (14), est activé par la commande (33).

12. Système de mesure selon la revendication 10, **caractérisé en ce qu'**il est prévu au moins une pompe (38) qui fournit, grâce à un conduit d'alimentation (40), le fluide de compression au dispositif de mesure (12).

13. Procédé destiné à saisir des signaux de mesure pendant un mouvement de pénétration d'un corps de pénétration (41) dans une surface d'un corps testé (14) d'un dispositif de mesure (12) ou pendant un mouvement de balayage d'un corps de pénétration (41) sur une surface d'un corps testé (14), selon l'une quelconque des revendications 1 à 9, lors duquel le corps testé (14) est positionné sur une table de mesure (25) et le dispositif de mesure (12) est posé, dans une position de départ, sur le corps testé (14), **caractérisé en ce que** le mouvement de pénétration ou le mouvement de balayage du corps de pénétration (41) est activé grâce à un dispositif générateur de force (44) qui est soumis à une pression de test d'un fluide de compression gazeux en vue de générer le mouvement de pénétration du corps de pénétration (41) dans le corps testé (14) ou qui est soumis à une pression de test en vue de générer le mouvement de balayage sur le corps testé (14) .

14. Procédé selon la revendication 13, **caractérisé en ce que** le dispositif générateur de force (44) est soumis à une pression initiale avant que le corps de pénétration (41) ne pénètre la surface du corps testé (14), **en ce que** le dispositif de mesure (12) est déplacé vers le corps testé (14), **en ce que** le mouvement de déplacement du dispositif de mesure (12) est arrêté lorsque le corps de pénétration (41) se pose sur le corps testé (14), **en ce que** le dispositif générateur de force (44) est soumis à la pression de test et qu'un mouvement de pénétration du corps de pénétration (41) dans la surface du corps testé (14) est saisi à l'aide d'un premier organe de mesure (71).

15. Procédé selon la revendication 13 ou 14, **caractérisé en ce que** la chambre de pression (46) est utilisée en tant que dispositif générateur de force (44) et active un mouvement de pénétration du corps de pénétration (41) à l'aide d'une première surface de pression (51) et que, à l'opposé de celle-ci, une deuxième surface de pression (42) est déplacée par rapport à un capteur (66), **en ce que** la force agissant sur le corps de pénétration (41) est saisie par le capteur (66) et que la profondeur de pénétration du corps de pénétration (41) dans le corps testé (14) est saisie par le premier organe de mesure (71) et **en ce que** la dureté de la surface du corps testé (14) est déterminée en fonction de la géométrie du corps de pénétration (41), à partir de la force de pénétration saisie par le capteur (66) et à partir de la profondeur de pénétration saisie par le premier organe de mesure (71).

16. Procédé selon l'une quelconque des revendications 13 à 15, **caractérisé en ce que**, pendant le mouvement de pénétration du corps de pénétration (41) dans le corps testé (14) qui est activé par la pression de test, la table de mesure (25) est déplacée dans une direction perpendiculaire au mouvement de pénétration du corps de pénétration (41) et une rayure (93) est réalisée dans la surface du corps testé (14) et **en ce que** les signaux de mesure du premier organe de mesure (71) destiné à mesurer la profondeur de pénétration et les signaux de mesure d'un autre organe de mesure (73) affecté au corps de pénétration (41) et destiné à mesurer une déviation du corps de pénétration (41) le long du sens de déplacement du corps testé (14) ainsi que les signaux de mesure saisis par le capteur (66) sont saisis et évalués, et **en ce que** de préférence
pendant un mouvement de pénétration du corps de pénétration (41) dans le corps testé (14) et un mouvement de déplacement de la table de mesure (25) en vue de former une rayure (93), un mouvement de déviation du corps de pénétration (41) à angle droit par rapport au mouvement de déplacement du corps testé (14) est saisi à l'aide d'un troisième élément capteur (88) d'un autre organe de mesure (73), et **en ce qu'**en particulier
avant la réalisation de la rayure (93) dans le corps testé (14), le dispositif de mesure (12) est posé sur la surface du corps testé (14) et est déplacé dans une direction perpendiculaire au mouvement de pose sur le corps testé (14) et que les signaux de mesure saisis par le premier organe de mesure (71) sont saisis et stockés en tant que données de profil avant rayure, et **en ce que** de préférence après la réalisation de la rayure (93) dans le corps testé (14), le dispositif de mesure (12) est posé dans la rayure (39) et le corps de pénétration (41) comportant le dispositif de mesure (12) est déplacé dans une direction perpendiculaire au mouvement de pose sur le corps testé (14) et que les signaux saisis par le dispositif de mesure (12) dans la rayure (93), le long du mouvement de déplacement du corps de pénétration (41), sont saisis et stockés en tant que données de profil après rayure.

17. Procédé selon la revendication 13, **caractérisé en ce que** la pression de test dans le dispositif générateur de force (44) est maintenue constante pendant le mouvement de balayage du corps de pénétration (41).
